(19) Europäisches Patentamt
European Patent Office
Office européen des brevets

(11) Publication number: **0 005 572**
**B1**

(12) **EUROPEAN PATENT SPECIFICATION**

(45) Date of publication of patent specification: **07.04.82**

(51) Int. Cl.$^3$: **C 01 B 17/04**

(21) Application number: **79200231.3**

(22) Date of filing: **10.05.79**

(54) **Improved process for the further processing of hydrogen sulphide-containing gases.**

(30) Priority: **23.05.78 NL 7805550**

(43) Date of publication of application:
**28.11.79 Bulletin 79/24**

(45) Publication of the grant of the patent:
**07.04.82 Bulletin 82/14**

(84) Designated Contracting States:
**BE DE FR GB**

(56) References cited:
**FR - A - 1 510 891**
**GB - A - 1 470 950**
**US - A - 4 085 199**

(73) Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Werner, Erik Svend Ernst**
**Carel van Bylandtlaan 30**
**NL-2596 HR The Hague (NL)**
Inventor: **Ouwerkerk, Cornelis**
**Carel van Bylandtlaan 30**
**NL-2596 HR The Hague (NL)**
Inventor: **Cornelisse, Roelof**
**Carel van Bylandtlaan 30**
**NL-2596 HR The Hague (NL)**

(74) Representative: **Puister, Antonius Tonnis, Mr. et al,**
**P.O. Box 302**
**NL-2501 CH The Hague (NL)**

**EP 0 005 572 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Improved process for the further processing of hydrogen sulphide-containing gases

The invention relates to a process for the treatment of hydrogen sulphide-containing gases, in which the sulphur-containing compounds of said gases are converted to elemental sulphur in a sulphur recovery unit with recovery of the resultant sulphur.

In general the feed for Claus plants consists of hydrogen sulphide-containing gases obtained during the regeneration step of gas purification processes. Said gas purification processes, which are required in order to reduce the quantity of sulphur-containing components (in most cases principally hydrogen sulphide) of industrial gases such as refinery gas, natural gas or synthesis gas obtained by the partial combustion of hydrocarbons or coal, to an acceptably low level before they are used further, generally comprise the absorption of the sulphur components from the gases into a liquid absorbent which is subsequently regenerated in order to obtain hydrogen sulphide-rich gases. Said latter gases are then subsequently supplied to a Claus plant, elemental sulphur being obtained from the sulphur components. The off-gases from said Claus plant can then in turn be treated themselves also in order to reduce to a very low level the sulphur content of the gases utlimately discharged to the atmosphere.

A process for the reduction of the total sulphur content of the off-gases originating from Claus plants has already been proposed. In such a process, the said off-gases are passed at a temperature higher than 175°C together with a hydrogen and/or carbon monoxide-containing gas over a sulphided catalyst of a metal of Group VI and/or Group VIII, which catalyst is supported on an inorganic oxidic carrier, after which the thus treated off-gases are passed through a liquid and regenerable absorbent for hydrogen sulphide and the non-absorbed portion of the said off-gases, optionally after combustion, are discharged to the atmosphere, while the hydrogen sulphide-enriched absorbent is regenerated and reused for further absorption of hydrogen sulphide and the hydrogen sulphide-rich gas mixture liberated during the regeneration is passed to a Claus plant. Preferably, the hydrogen sulphide-rich gas mixture liberated during the regeneration is recycled to the Claus plant whence the off-gases originated, so that a closed process is obtained.

Such a process is known from British patent specification No. 1,470,950. The process described therein is particularly suitable for treating hydrogen sulphide-containing gases — with the subsequent conversion of hydrogen sulphide to elemental sulphur in a Claus plant — which have a high carbon dioxide content relative to hydrogen sulphide contained in said gases. According to this process part of a hydrogen sulphide/carbon dioxide-containing feed to the Claus plant bypasses the said Claus plant and is directly contacted with the liquid and regenerable absorbent for hydrogen sulphide. The $H_2S/CO_2$ molar ratio of the feed to the Claus plant is favourably modified by recycling the hydrogen sulphide-rich gas mixture obtained after regeneration to the Claus plant.

In United States patent specification No. 4,085,199 another Claus plant off-gas treating process is described. In this process a single absorption zone is used for treating both the industrial gas to be purified and the reduced off-gas of the Claus plant. The line-up shown is less suitable for treating gases having a high carbon dioxide content relative to hydrogen sulphide contained in said gases, because any carbon dioxide absorbed will in this case also be sent to the Claus plant.

In addition to hydrogen sulphide, industrial gases often also contain other sulphur compounds, such as carbonyl sulphide, mercaptans and disulphides, which organic sulphur compounds must likewise be removed before the said gases can be used. These industrial gases, however, as a rule also contain carbon dioxide. Liquid absorbents for the removal of hydrogen sulphide generally prove to be good absorbents for carbon dioxide as well. In practice, for the removal of an organic sulphur compound such as carbonyl sulphide a liquid absorbent is used which is in particular an efficient solvent for carbon dioxide. Consequently, after regeneration of said absorbent a hydrogen disulphide/carbon dioxide-containing gas will be obtained which subsequently requires further processing in a Claus plant. As long as such gases have a relatively low carbon dioxide content (up to about 15% by volume) and a relatively high hydrogen sulphide (more than 25% by volume) they can be readily processed in a Claus plant. However, if the hydrogen sulphide content of the gases obtained in the regeneration of loaded liquid absorbents is less than 25% by volume and the carbon dioxide content of said gases is equal to or higher than the hydrogen sulphide content the Claus plant is difficult to operate in respect of its thermal zone and special measures have to be taken during the combustion of a portion of the hydrogen sulphide for the production of the quantity of sulphur dioxide required for the Claus reaction. Said operational difficulties arise largely because the requisite temperatures for the combustion of the hydrogen sulphide cannot be attained in the thermal zone.

The present invention envisages a process for the treatment of gases which in addition to a relatively low hydrogen sulphide content also contain carbonyl sulphide and/or mercaptans and carbon dioxide, in such a way that the gas mixture obtained after regeneration of the loaded liquid absorbent can be processed into

elemental sulphur in a sulphur recovery unit. Another object of the invention is to carry out said process in such a way that the sulphur recovery efficiency of the sulphur recovery unit is increased by additionally subjecting its off-gases to a further treatment for the removal of residual sulphur compounds so that said off-gases may be discharged to the environment without objection.

The invention therefore relates to a process for the treatment of hydrogen sulphide-containing gases and the conversion of sulphur-containing compounds of said gases into elemental sulphur in a sulphur recovery unit with recovery of the resultant sulphur in which process

(a) gases having a relatively high carbon dioxide content in relation to the hydrogen sulphide present are introduced into a first absorption zone where they are countercurrently contacted with a regenerable absorption liquid supplied to the said zone, in order to remove hydrogen sulphide under operating conditions which are non-selective or substantially non-selective in respect of the co-absorption of carbon dioxide;

(b) the gases, freed from hydrogen sulphide are passed out of the absorption zone and the regenerable absorption liquid, loaded with hydrogen sulphide, and carbon dioxide, is supplied, directly or indirectly, from the absorption zone to a regeneration zone for regeneration by means of heating and/or stripping, yielding a gas mixture containing hydrogen sulphide and carbon dioxide, and a regenerated absorption liquid;

(c) the gas mixture obtained in step (b) and containing hydrogen sulphide, and carbon dioxide is at least partly supplied to a sulphur recovery unit containing at least one catalytic zone, with recovery of the resultant sulphur;

(d) the off-gas from the catalytic zone of the sulphur recovery unit is supplied to a catalytic reduction zone, in which sulphur compounds other than hydrogen sulphide are converted into hydrogen sulphide at a temperature above 170°C in the presence of hydrogen and/or carbon monoxide over a catalyst;

(e) the gas mixture leaving the catalytic reduction zone and containing substantially hydrogen sulphide as sole sulphur compound, is supplied to a second absorption zone, after cooling, in which second zone, in order to remove hydrogen sulphide, the gas mixture is contacted at a temperature below the dew point of water with a regenerable absorption liquid; and,

(f) the gas mixture, freed from hydrogen sulphide, is discharged from the second absorption zone and the absorption liquid loaded substantially with hydrogen sulphide is regenerated. The process of the invention is characterized in that, in treating gases which also contain organic sulphur compounds in addition to hydrogen sulphide and which organic sulphur compounds are removed as well in step (a) by co-absorption, thereby yielding in step (b) a gas mixture containing organic sulphur compounds in addition to hydrogen sulphide and carbon dioxide, a portion of the gas mixture bypasses the sulphur recovery unit in step (c) and is directly introduced into the catalytic reduction zone in step (d), together with the off-gas from the catalytic zone of the sulphur recovery unit, the regenerable absorption liquid of the second absorption zone in step (e) being the same as the one of the first absorption zone and being applied under operating conditions which are selective in respect of the co-absorption of carbon dioxide, the hydrogen sulphide-loaded absorption liquid of the said second absorption zone subsequently being regenerated in step (f) by directly or indirectly supplying the same to the regeneration zone in step (b), whereafter part of the regenerated absorption liquid is supplied to the first absorption zone and part thereof to the second regeneration zone.

In a preferred embodiment of the invention the first absorption zone is divided into at least two sections arranged one above the other, whereby the gases having a relatively high carbon dioxide content in relation to the hydrogen sulphide present are introduced into the lower one of the two sections and are passed out of the absorption zone, after having been freed from hydrogen sulphide and organic sulphur compounds, through the upper one of said two sections, whereas the absorption liquid is supplied to the upper one of the two sections, said absorption liquid being intermediately cooled outside the absorption zone before it is supplied from the upper section to the lower section of the zone. From said lower section the loaded absorption liquid is directly supplied to the regeneration zone.

By "Claus reaction" is meant the reaction between hydrogen sulphide and sulphur dioxide whereby elemental sulphur and water are produced. By "thermal sulphur recovery unit" is understood a plant for carrying out the Claus reaction, which plant comprises a thermal zone in which hydrogen sulphide is partially combusted in order to obtain the required quantity of sulphur dioxide which subsequently enters into reaction with uncombusted hydrogen sulphide, forming sulphur and water, which sulphur is subsequently condensed and removed, followed by one or more catalytic zones in which the same reaction is further promoted and additional sulphur is removed.

By "non-thermal sulphur recovery unit" is understood a Claus plant not comprising a thermal zone; such a sulphur unit only has catalytic zones in which the Claus reaction takes place and elemental sulphur is produced.

Hereinafter, unless expressly stated otherwise, a sulphur recovery unit refers both to a thermal and non-thermal sulphur unit.

By "Claus off-gases" are meant the remaining gases as obtained after the final

catalytic zone of a sulphur recovery unit. In general, it is customary for such residual gases to pass first through a condenser for the separation of elemental sulphur present. Although it is customary to use two catalytic zones, a third catalytic zone is also regularly used. Besides hydrogen sulphide and sulphur dioxide in a ratio of approximately 2:1, this type of off-gases further contains elemental sulphur, hydrogen, nitrogen and minor quantities of inert gases if the thermal sulphur plant is operated with air, water in the form of water vapour, carbon dioxide and minor quantities of carbon monoxide, carbonyl sulphide and carbon disulphide.

By "absorption conditions which are selective in respect of the co-absorption of carbon dioxide" is meant that such a temperature, gas velocity and/or pressure are used for absorbing hydrogen sulphide that the smallest possible absorption of carbon dioxide takes place.

The process according to the invention can be very suitably used for hydrogen sulphide-containing gases having a calculated hydrogen sulphide/carbon dioxide ($H_2S/CO_2$) molar ratio smaller than 1. More in particular, said calculated $H_2S/CO_2$ molar ratio may lie between 0.9 and 0.001.

By "calculated $H_2S/CO_2$ molar ratio of a gas" is understood that ratio which is found by expressing all sulphur-containing compounds present in the gas in terms of $H_2S$ equivalents. Hereinafter, by "$H_2S/CO_2$ ratio" will invariably be understood the calculated molar ratio unless expressly stated otherwise. An example of a gas having a low $H_2S/CO_2$ ratio is for instance a hydrogen-containing gas obtained by partial combustion of coal, with 50% of $CO_2$ and 1,000 ppmv $H_2S$ (calculated) and having an $H_2S/CO_2$ ratio of 0.002. Such a gas can suitably be further purified by means of the process according to the invention.

The process according to the invention can also be used for hydrogen sulphide-containing gases having an $H_2S/CO_2$ ratio larger than 1, if the supply of such gases diminishes during the operation of the sulphur unit. If the throughput of such gases is reduced by 25% or more (a turndown ratio of 75% or less) the process of the invention also provides a solution.

The process according to the invention renders it possible for gases containing a relatively large proportion of organic sulphur compounds, such as carbonyl sulphide, and little hydrogen sulphide in addition to a large quantity of carbon dioxide, to be purified of said sulphur compounds without problems arising in the production of elemental sulphur. Although a certain degree of conversion of carbonyl sulphide in a catalytic zone of a sulphur unit is possible, its complete conversion is not attainable because of the thermodynamic equilibrium, and carbonyl sulphide will invariably be present in the Claus off-gas. Said carbonyl sulphide is now further converted to hydrogen sulphide in the catalytic reduction zone in step (d), where the thermodynamic equilibrium is less unfavourable in respect of the conversion of carbonyl sulphide. After adsorption and recycling of the absorption liquid, either directly or indirectly, to the regeneration zone, the resultant hydrogen sulphide contributes to raising the hydrogen sulphide content in the feed to the sulphur recovery unit. In the second absorption zone following the catalytic reduction zone, the larger amount of carbon dioxide absorbed in the first absorption zone under the non-selective absorption conditions applied there, is largely rejected as a result of the use of operating conditions which are selective in respect of the co-absorption of carbon dioxide. The hydrogen sulphide-free gas mixture which is discharged from the second absorption zone consists substantially of carbon dioxide and nitrogen.

By using the same absorption liquid both in first absorption zone and in the second absorption zone it is possible for its regeneration to take place in a single regneration zone. The hydrogen sulphide-loaded absorption liquid from the second absorption zone is preferably at least partly supplied to the first absorption zone and introduced into the upper section thereof. Preferably, however, all the liquid from the second zone is introduced at the top of the first zone, but it is possible to introduce at least part thereof (between 0 and 50%) into the regeneration zone directly.

In the preferred embodiment the first absorption zone consists of at least two separate sections which are flowed through countercurrently in relation to each other by the gases to be treated and the absorption liquid. Preferably the absorption zone consists of two sections one above the other, the gases to be treated being introduced into the lower section and the absorption liquid into the upper. The absorption zone is provided with such means that the gases are able to ascend unimpeded from the lower section to the upper, but the downward flow of absorption liquid is interrupted in order to be able to remove said liquid from the zone for the purpose of intermediate cooling.

The regenerated absorption liquid from step (b) is preferably introduced at the top of the upper section of the first absorption zone, whereas the absorption liquid loaded substantially with hydrogen sulphide is introduced into step (f) at the bottom of the said upper section.

It is preferred that in step (a) the regenerable absorption liquid should be intermediately cooled to a temperature equal to or substantially equal to the temperature of the liquid which is supplied to the upper section. Preferably the absorption liquid in step (a) is intermediately cooled to a temperature between 20° and 70°C.

Intermediate cooling has the advantage that for a desired loading of the absorption liquid (in correlation with the desired purification of the

gases to be treated) it is possible to use less absorption liquid than without intermediate cooling. As a result of this less heat and/or steam is required for the regeneration of the liquid in step (b). The process of the invention is especially significant at low partial pressures (lower than 1 bar abs.) of the hydrogen sulphide. This process works to its best advantage when used for the purification of gases which have a partial $H_2S$ vapour pressure of 0.02 to 0.4 bar abs. at a temperature of 40°C of the regenerated absorption liquid.

Intermediate cooling of the absorption liquid is also important in those cases where the process of the invention is used in regions where the ambient temperature exceeds 40°C for part of the year and consequently the cooling of the absorption liquid to lower absorption temperature presents problems.

For some applications it may be advantageous to apply the intermediate cooling of the absorption liquid in the second absorption zone as explained hereinafter. For that purpose the second absorption zone is divided into at least two sections arranged one above the other, the gas mixture leaving the catalytic reduction zone in step (e) being introduced into the lower one of the two sections and being discharged from said absorption zone through the upper section thereof, the absorption liquid being supplied to the upper one of the two sections and being intermediately cooled outside said absorption zone before it is supplied from the upper section to the lower section of the zone, which absorption liquid, after leaving said lower section, is directly supplied to the regeneration zone in step (b). Preferably the gas mixture discharged from the upper section of the second zone is introduced at the top of the first absorption zone for further removal of sulphur compounds present.

For the purpose of intermediate cooling in step (a) the absorption liquid is preferably discharged from the first absorption zone at a point located between the 5th and the 15th contact layer (calculated from the introduction of the gas) in an absorption zone having from 10 to 50 contact layers. Hence it also follows that in general the lower section of the absorption zone contains a smaller number of contact layers or trays than the upper section.

The gas mixture obtained in step (b) and containing hydrogen sulphide, carbonyl sulphide and carbon dioxide is at least partly supplied to the sulphur recovery unit. The other part of said gas mixture bypasses the sulphur recovery unit and is introduced direct into the catalytic reduction zone following the sulphur recovery unit after being heated to above 180°C. Said method has the following advantages. In the hydrogen sulphide-containing gas to be processed there may be present in addition to carbonyl sulphide other sulphur-containing compounds, such as carbonyl disulphide, mercaptans and/or disulphides. Under the conditions prevailing in the catalytic reduction zone, the said compounds, in common with the carbonyl sulphide, are converted into hydrogen sulphide. In the second absorption zone after said catalytic reduction zone, all the hydrogen sulphide present is selectively removed, while the carbon dioxide present largely slips through the absorption zone as a result of the absorption conditions used, which are selective in respect of the co-absorption of carbon dioxide. The loaded absorbent will therefore contain substantially only hydrogen sulphide. In the combined regeneration of the absorbent from the first absorption zone and from the second absorption zone a gas mixture for the sulphur unit is then obtained which has a considerably more favourable $H_2S/CO_2$ ratio than the gas mixture which would be obtained if a part of the gas mixture did not bypass the said sulphur unit. It is desirable, however, that at all times an unchanging or substantially unchanging quantity of the gas mixture should bypass the sulphur recovery unit and the quantity which is supplied to said unit should be made dependent on the supply of hydrogen sulphide-containing gases to be treated. As a result of this the operation of the entire process, and in particular that of the second absorption zone, is rendered independent of the turndown. Preferably the quantity of gas mixture which bypasses the sulphur recovery unit is selected such that the sulphur recovery unit remains readily operable at a turndown of 30%. If the supply of gases to be treated diminishes for some reason, this will not affect the operation of the second absorption zone since a smaller proportion of the gas mixture is supplied to the sulphur recovery unit, namely in such a way that the absolute quantity bypassing the sulphur recovery unit remains substantially constant. In the case of different turndown ratios a smaller or larger quantity, as appropriate, is supplied direct.

The bypassing of the sulphur recovery unit by part of the gas mixture has as a secondary effect in that the improved $H_2S/CO_2$ ratio allows the sulphur unit to be constructed smaller because a large quantity of $CO_2$ has already been discharged from the process through the second absorption zone.

It it is assumed that it is desirable for the feed to a thermal sulphur unit to contain at least 40% by volume of $H_2S$ in order to preclude operational difficulties in the thermal zone of the unit, there is a simple rule of thumb which states that the fraction of the gas mixture obtained in step (b) during regeneration of the loaded absorption liquid to be supplied to the sulphur recovery unit in step (c) should be numerically equal or substantially equal to the calculated $H_2S/CO_2$ ratio of the gas supplied to the first absorption zone in step (a). If the calculated $H_2S/CO_2$ ratio is equal for example to 0.25, then the process according to the invention will yield optimum results if 1/4 of the

gas mixture obtained in step (b) is supplied as feed to the sulphur unit, while 3/4 of said gas mixture is supplied to the catalytic reduction zone direct.

It will be clear to the expert that instead of a thermal sulphur recovery unit it is also possible to use a non-thermal sulphur recovery unit. In that case the $SO_2$ required for the Claus reaction can be obtained by combusting in a separate burner a part of the produced elemental sulphur to form $SO_2$, with the aid of air, oxygen or oxygen-enriched air.

The process according to the invention is suitably used for the further processing of all hydrogen sulphide-containing gases which have a relatively high carbon dioxide content and thereby an unfavourable $H_2S/CO_2$ ratio. Hydrogen sulphide-containing gases, such as natural gas or synthesis gas, which contain large quantities of carbon dioxde, can therefore be very suitably further processed. The present process is especially advantageously used on hydrogen sulphide-containing gases which are obtained in a partial combustion process of heavy oil fractions or coal. According to the type of industrial gas, the hydrogen sulphide-containing gas can contain hydrogen cyanide in addition to organic sulphur compounds. The said organic sulphur compounds may be carbonyl sulphide, carbon disulphide, mercaptans and/or disulphides. Depending on its origin, natural gas can contain lower alkyl mercaptans and the corresponding disulphides. The lower alkyl mercaptans contain alkyl groups having at most 6 carbon atoms.

The hydrogen sulphide-containing gas mixture obtained from regeneration in step (b) generally has a composition which is improved in respect of its $H_2S/CO_2$ ratio and contains relatively fewer organic sulphur compounds than the gas which would be obtained according to the state of the art.

In general, hydrogen sulphide-containing gases with a calculated $H_2S/CO_2$ ratio smaller than 1 and having 0.0005 to 2.5% by volume of COS, 0 to 1.5% by volume of $CS_2$ and 0 to 1.2% by volume of mercaptans and/or disulphides, are suitable to be treated according to the process of the invention.

Preferably the absorbent used in the first absorption zone and in the second absorption zone is an aqueous solution of a physical solvent such as sulfolane, or a derivative thereof, with a weak base. Such an aqueous solution will hereinafter be called a "sulfinol" solution. A regenerable liquid which can suitably be used according to the process of the invention is an aqueous solution of a base having a $pK_b$ of 3—8 at 25°C in a proportion of 10—70% by weight and sulfolane and/or its derivatives in a proportion of 25—70% by weight. Suitable bases are alkanolamines containing from 1—4, and preferably from 2 to 3, carbon atoms per alkanolamine group. Examples of these are diethyl-monoethanolamine, methyl-diethanolamine, di-isopropanolamine and mixtures thereof.

Preferably, the regenerable absorption liquid contains 30—55% by weight of alkanolamine, and 30—55% by weight of the sulfolane or the derivative thereof. The rest of the mixture consists of water, generally 5—35% by weight.

In the second absorption zone the same absorption liquid is used as in the first absorption zone under conditions which are selective in respect of the co-absorption of $CO_2$. This will be the case when relatively high gas velocities are used. At the same time the pressure is preferably selected as low as possible, for example atmospheric pressure or a pressure which has a slight excess pressure (0—1 kg/cm²) (0—98.0 kPa) in relation to the amospheric pressure. In more general terms, the pressure will be lower than 5 kg/cm² (490 kPa) abs. The gas velocities used exceed 0.5 m/sec, and preferably 0.9 m/sec. In particular gas velocities from 1 to 2.5 m/sec are used. The gas velocities are based on the "active" or aerated surface area of the trays to be used. The absorption temperature used is preferably chosen as low as possible in order to promote the selectivity of the $H_2S$ absorption, and temperatures between 15° and 65°C are preferred.

The absorption liquid is used in the first absorption zone under conditions which are non-selective or only slightly selective in respect of the co-absorption of $CO_2$. This is the case when relatively low gas velocities (lower than 0.5 m/sec) are used at pressures in excess of the atmospheric pressure. Suitable pressures are in the range from 2—100 kg/cm² (196—9807 kPa) abs., preferably pressures from 5—70 kg/cm² (490—6865 kPa) abs. are used. The gas velocities are preferably in the range from 0.02 to 0.4 m/sec, the gas velocity again being defined in relation to the aerated surface area of the trays to be used.

The temperature to be used in the first absorption zone are in the range of from 15° to 135°C and preferably from 30° to 80°C. At the same time it is preferred that the absorption be so carried out that the temperature at the bottom of the absorption zone is only 5°—30°C higher than the temperature at the top of the absorption zone.

This preferred condition can be controlled by dividing the first absorption zone into two separate sections and by intermediate cooling of the absorption solution. Before the absorption liquid from the upper absorption section is introduced into the lower, it is first recooled outside the absorption zone to a temperature approximately equal to that of the absorption liquid which is supplied to the upper section.

The second absorption zone generally has fewer than 20 and preferably 4—15 contact layers, such as trays.

If the first absorption zone contains two separate sections, the number of contact layers in the lower section is smaller than that in the

upper section.

In the catalytic reduction zone the off-gas from the catalytic zone of the sulphur recovery unit, together with that part of the gas mixture which bypasses the sulphur recovery unit, is subjected to a reducing treatment in order to convert sulphur compounds other than hydrogen sulphide into $H_2S$.

After the Claus off-gases have passed the last catalytic zone and an optional condenser for the recovery of elemental sulphur, they normally have a temperature of less than 170°C. However for the reduction stage over a catalyst the off-gases should have a higher temperature, for which reason these off-gases are first heated to a temperature in excess of 170°C. The Claus off-gases are preferably brought to a temperature which is between 180° and 450°C and more preferably between 200° and 350°C.

The increase in temperature to more than 170°C is also important in view of the presence of small quantities of elemental sulphur in the form of a haze in the off-gases. This unacceptable sulphur haze disappears by raising the temperature to above the dew point of sulphur. It has also been found that by raising the temperature to above 170°C the presence of any elemental sulphur in the gaseous phase from the sulphur unit does not have an adverse effect on the catalytic activity of the reduction catalyst to be used in the reduction zone.

By simultaneously passing the Claus off-gas and said portion of the gaseous mixture at the indicated temperature over preferably a sulphided catalyst of the Group VI and/or Group VIII metal, all sulphur components of the gaseous mixture other than hydrogen sulphide, including any mercaptans and/or disulphides present, are converted into hydrogen sulphide. Sulphur dioxide will be reduced by the hydrogen present, while carbonyl sulphide and/or carbon disulphide are hydrolysed over the catalyst to hydrogen sulphide by water vapour present. Carbonyl sulphide and carbon disulphide will also be hydrogenated to hydrogen sulphide to a certain extent. Under the conditions specified any elemental sulphur present will be reduced to hydrogen sulphide as well.

The conversion in the catalytic reduction zone mentioned in step (b) and in step (c) of the process according to the present invention is preferably carried out at a temperature between 200 and 350°C in the presence of at least the stoichiometric quantity of hydrogen and/or carbon monoxide required for complete conversion of sulphur dioxide and elemental sulphur into hydrogen sulphide. Generally, 1.3—2.0 times the required stoichiometric quantity is used. Larger quantities of hydrogen and/or carbon monoxide are unsuitable for economic reasons only.

The pressure used in the catalytic reduction zone is generally equal to or slightly lower than the pressure used in the preceding sulphur unit. The pressure in this reduction zone is generally of from 0.7 to 2 kg/cm² (68.6 to 196.1 kPa) abs.

For the purpose of the present invention carbon monoxide is equivalent to hydrogen in respect of reducing capacity since it forms hydrogen in situ according to the following reaction equation:

$$CO + H_2O \rightarrow CO_2 + 2H$$

It has been found that reduction of sulphur dioxide with the aid of carbon monoxide is a very fast reaction as a result of the hydrogen formed in situ. For this reason particular preference is given to the use of a hydrogen- and carbon monoxide-containing gas in step (a). A gas having a $H_2$/CO ratio between 9:1 and 2:8 may suitably be used, while preference is given to a gas having a $H_2$/CO ratio of 4:1.

The hydorgen- and/or carbon monoxide-containing gas used is preferably a gas containing both compounds, such as town gas, water gas or synthesis gas. Pure hydrogen or carbon monoxide can also be used. Suitable hydrogen rich gases and gas mixtures are the off-gases from a catalytic reforming unit, the gas originating from a hydrogen unit or the gas originating from a unit for the processing of saturated crude petroleum gases. A hydrogen- and carbon monoxde-containing gas may also be obtained by sub-stoichiometric combustion of hydrocarbon gases such as methane, ethane, propane, butane or mixtures thereof with the aid of a suitable burner. The preparation of such a gas may suitably be combined with the joint heating of the Claus off-gas and of the said portion of the gas mixture passed to the reduction zone, up to the required reaction temperature, by mixing it in a reaction chamber which follows the combustion chamber of the burner used for the sub-stoichiometric combustion.

Although sulphided catalysts of a Group VI and/or Group VIII metal supported on an inorganic oxidic carrier are genereally suitable, preference is given for effecting the present invention to the use of reduction catalysts containing one or more of the following metals: molybdenum, tungsten and chromium (Group VI metals) and/or one or more of the metals: cobalt, nickel and iron (Group VIII metals), while a combination of such a Group VI metal and such a Group VIII metal is preferred. The inorganic oxidic carrier may be alumina, silica, magnesia, boria, thoria, zirconia or a mixture of two or more of these compounds. Reduction catalysts which are most preferred for use in the process according to the invention are a $Ni/Mo/Al_2O_3$ or a $Co/Mo/Al_2O_3$ catalyst.

The group VI and/or Group VIII metal catalyst is used in the sulphided form. The catalyst may be presulphided by means of a suitable sulphiding agent such as a mixture of hydrogen and hydrogen sulphide containing 10—15% by volume of $H_2S$. The catalyst can also be

sulphided in situ by means of the reaction off-gas proper. However, a sulphiding mixture which contains hydrogen, hydrogen sulphide and water in a ratio of 1:1:1 is particularly suitable, the temperature used lying between 300° and 400°C. The catalyst to be sulphided may contain the Group VI and/or Group VIII metals as oxide or in the form of the element.

Before being contacted with the liquid absorbent for hydrogen sulphide, the reduced gas mixture obtained in step (d) is first cooled, in accordance with common practice, to a temperature below the dew point of water. It is preferably cooled to a temperature of from 6—60°C. The cooling is preferably carried out in two stages, indirect heat exchange with water taking place in the first stage and direct heat exchange with water in the second stage.

After cooling, the reduced gas mixture is contacted in an absorption zone with the liquid and regenerable solvent under conditions which are selective in relation to the co-absorption of $CO_2$, as described.

After the reduced gas mixture has been passed through the absorbent, the non-absorbed portion thereof which now substantially comprises nitrogen, carbon dioxide, very small quantities of hydrogen and traces of hydrogen sulphide, is discharged to the atmosphere. If desired this non-absorbed portion may also be combusted in the usual way before it is passed to the stack.

Regeneration of the loaded solvent in step (b) is generally effected at temperatures between 100° and 190°C and pressures between 0 and 4 kg/cm² (0—392 kPa) excess pressure.

The required regeneration heat is supplied in the usual way by indirect heating or by steam stripping. What proportion of the regenerated absorption liquid is recycled to the first absorption zone and what proportion to the second depends on many factors, primarily on the gas composition of the gas to be treated in accordance with the process of the invention and the concomitant loading of the absorption liquid used. In general it may be said that 40 to 80% of the total liquid is supplied direct to the first absorption zone.

The invention will now be elucidated with reference to the drawing and the Example.

Figure 1 is a simplified process scheme in which auxiliaries, such as pumps and valves, have ben omitted and in which a hydrogen sulphide-containing gas stream is partly passed to the sulphur recovery unit and partly bypasses the said unit.

Figure 2 also represents a simplified process scheme showing an alternative configuration for the absorption column with intermediate cooling of the absorbent in the second absorption zone.

In Figure 1 a gas mixture containing hydrogen sulphide as well as carbon dioxide and carbonyl sulphide is introduced into the lower section of absorption column 2 via a line 1. The absorbent used is an aqueous sulfinol solution and the absorption conditions are such that a non-selective absorption of hydorgen sulphide, carbon dioxide and carbonyl sulphide takes place. The gas mixture passes through column 2 countercurrently to the sulfionol solution. The mixture leaves the lower section 2*a* via a line 3 and is passed into the bottom of the upper section 2*b*. The purified gas mixture, which is substantially free of the said compounds, leaves the absorption column 2 via a line 4.

The regenerated sulfinol solution is introduced into the top of section 2*b* via a line 8*a*. This sulfinol solution which during the countercurrent contact with the gas mixture increases in temperature by absorption therein of hydrogen sulphide, carbon dioxide and carbonyl sulphide and any other absorbable gas components leaves the upper section 2*b* via a line 5 and is introduced into the top of section 2*a* after cooling in a cooler 26 to a temperature which is approximately equal to that of the absorbent which is introduced into the top of section 2*b*. After having passed this latter section the solvent, which is loaded with hydrogen sulphide, carbon dioxide and carbonyl sulphide, is passed via a line 6 and heat exchanger 27 to a regeneration column 7. In heat exchanger 27 the loaded solvent is brought into heat exchange with the regenerated solvent which is passed from the regeneration column 7 to the absorption section 2*b* via a line 8*a*, the heat exchanger 27 and a cooler 28.

A portion of the regenerated solvent is introduced into the top of a second absorption column 20 via a line 8*b* and a cooler 29.

During regeneration of the loaded solvent a gas mixture is obtained which mainly consists of hydrogen sulphide, carbon dioxide and carbonyl sulphide. It has an improved $H_2S/CO_2$ ratio in relation to the gas mixture which is introduced into column 2 via the line 1. The reason for this is explained in greater detail below.

A gas mixture is discharged from column 7 through a line 9, partly passing to a sulphur recovery unit 10 and partly bypassing the said unit via a line 13. The quantity which bypasses the sulphur recovery unit is also determined by the quantity of carbon dioxide present. If the $H_2S/CO_2$ ratio is relatively unfavourable for the sulphur recovery unit a greater quantity will have to bypass this unit. The sulphur recovery unit 10 comprises a thermal stage and an after-cooler/sulphur condenser as well as a number of catalytic stages with intermediate coolers/sulphur condensers (not shown in the drawing). In said unit the hydrogen sulphide is converted, an oxygen-containing gas being supplied via a line 11 and elemental sulphur being discharged via a line 12. The reaction off-gas leaves the sulphur recovery unit via a line 14. The portion of the gas mixture which has bypassed the unit 10 via a line 13 is added to the off-gas of the sulphur recovery unit 10 in the line 14 and these gases are jointly supplied to

an in-line burner 15. In this burner a hydrogen- and carbon monoxide-containing gas is obtained by sub-stoichiometric combustion of a hydrocarbon gas. The hydrocarbon gas and the required oxygen-containing gas are passed to the burner via lines *a* and *b*. In the burner 15 the gas mixture is mixed with the hot combustion gas, a hot gas mixture which also contains the required hydrogen and carbon monoxide being subsequently passed via a line 16 into a reactor 17 in which sulphur compounds other than hydrogen sulphide, such as sulphur dioxide, carbonyl sulphide and/or mercaptans are converted over a reduction catalyst into a hydrogen sulphide. The reduced gas mixture which contains substantially no sulphur compounds other than hydrogen sulphide leaves the reactor 17 via a line 18 and is cooled in a heat exchanger 19. (Instead of indirect cooling in a heat exchanger 19 a two-stage cooling method with indirect and direct heat exchange may be used). After cooling, the cooled gas mixture is passed to an absorption column 20 which is operated under such conditions that the absorption is selective in relation to the co-absorption of carbon dioxide. The non-absorbed components of the gas mixture, which consist principally of carbon dioxide and nitrogen, are discharged from the unit 20 through a line 22. In order to convert all traces of hydrogen sulphide the non-absorbed gas components are combusted in a combustion oven 23 before they are finally discharged to the atmosphere through a line 24. The hydrogen sulphide-rich absorbent is recycled to the first absorption column 2 via a line 21 and introduced at the bottom of the upper section 2*b*. As a result thereof the $H_2S/CO_2$ ratio of the gas mixture obtained during regeneration is favourably affected. If desired, a portion of the loaded solvent which is discharged from the absorption column 20 via a line 21 may be introduced direct into the regeneration column 7 via a line 25. This possibility enhances the flexibility of process operation.

In Figure 2 all reference numerals have remained unaltered insofar as they relate to the same parts as in Figure 1. A process scheme as shown in said figure may be suitably used in those cases in which the absorption liquid from the first absorption column is less loaded than that from the second absorption column. This may be the case when the first column must be operated at atmospheric pressure, while the gas to be treated has a low acid gas component content. In the case shown, a gas stream 31 is introduced into a simple absorption column 32 wherein the stream is brought into countercurrent contact with a sulfinol solution under non-selective conditions. The treated gas leaves the absorption column 32 via a line 34, while the absorption liquid which is only partly loaded is supplied via a line 33 to the upper section 42*b* of the second absorption column where it is introduced into the bottom of this section.

The gas leaving the reduction reactor 17 is introduced via a line 18 and a heat exchanger 19 into the bottom of the lower section 42*a* of the second absorption column, where it is countercurrently contacted with the absorption liquid. This second column is operated under such conditions that the absorption is selective in relation to the co-absorption of carbon dioxide. The gas mixture leaves the lower section via a line 43 and subsequently passes through the upper section 42*b*. The non-absorbed gas components (essentially $CO_2$ and nitrogen) leave the second absorption column via a line 44 and may optionally be further treated as indicated in Figure 1. In the case depicted the non-absorbed components are recycled in Figure 2 to the first absorption column 32 and introduced therein at the top in order to remove as much as possible any sulphur compounds still present (hydrogen sulphide and/or non-converted carbonyl sulphide) from the said components.

It is of vital importance that only a small number of top trays of column 32 be used for this purpose in order to prevent carbon dioxide from again being co-absorbed to a considerable extent. This way of final purification of the gas components in the line 44 can only be suitably carried out in those cases in which both the absorption columns are operated at (approximately) the same pressure and in which the non-absorbed gas components do not form an undesired contamination for the product gas in the line 34.

The absorption liquid which is introduced into the upper section 42*b* leaves the second absorption column via a line 45 for intermediate cooling in a cooler 46 and is subsequently introduced into the lower section 42*a* of the column. The loaded absorption liquid leaves the second absorption column via a line 41 and is recycled via a heat exchanger 27 to a regeneration column 7. After regeneration the absorption liquid is partly recycled to the first absorption column 32 via a line 8*a* and partly to the upper section 42*b* of the second absorption column via a line 8*b* as described above.

In the embodiment of Figure 2 cases are conceivable in which it is preferred to recycle all of the regenerated absorption liquid to the first absorption column 32 and subsequently to pass it all to the second absorption column where the absorption liquid is again introduced at the top of the upper section 42*b*.

Example

A quantity of 200 kmol/h of a gas steam which contained hydrogen sulphide, carbon dioxide and carbonyl sulphide and which was obtained from a process for the gasification of crude oil was teated in accordance with the process scheme shown in Figure 1. The gas steam was introduced into the lower section of the absorption column at a pressure of approximately 20 bar and a temperature of 60°C. The

absorbent used was a sulfinol solution which contained 40% by weight of sulfolane, 45% by weight of di-isopropanol amine and 15% by weight of water. It was introduced at the top of the upper section of the absorption column at a temperature of 40°C. In addition, a sulfinol solution partly loaded with hydrogen sulphide and carbon dioxide was introduced into the bottom of the upper section of this column at a temperature of 49°C. The entire solution was recycled to the top of the lower section of the absorption column after being cooled from 59°C to 40°C in a cooler arranged outside the column. The treated gas flowing from the upper section of the absorption column was substantially free of hydrogen sulphide and contained only a small quantity of carbonyl sulphide. After atmospheric regeneration of the sulfinol solvent, a hydrogen sulphide-containing gas stream was obtained with a high carbon dioxide content, which gas stream also contained carbonyl sulphide. This gas stream, which was obtained in a quantity of 13.2 kmol/h, was partly passed to a sulphur recovery unit (27%) while the rest (73%) was mixed with the reaction off-gas from the sulphur recovery unit, which off-gas was obtained in a quantity of 6.34 kmol/h and at a temperature of 150°C. The combined gas mixture, which now contained inter alia sulphur dioxide and a quantity of elemental sulphur, was heated in an in-line burner to 290°C and supplied at this temperature to the reduction reactor, which contained a sulphided $Co/Mo/Al_2O_3$ catalyst. In the reactor the sulphur compounds other than hydrogen sulphide were converted in the presence of excess hydrogen and carbon monoxide, which were supplied to the reactor as a separate gas stream. The gas mixture originating from the reduction reactor contained no sulphur dioxide or elemental sulphur and a reduced content of carbonyl sulphide. The mixture was cooled to 40°C and supplied to an atmospheric absorption column in which the same sulfinol solution was used as in the absorption column with a lower and upper section. The atmospheric absorption column had fewer than 20 trays with valves and the gas velocity used was approximately 1.5 m/sec in respect of the "aerated" part of the said trays. The non-absorbed part of the treated gas mixture essentially contained nitrogen and carbon dioxide and only very small quantities of hydrogen sulphide and carbonyl sulphide. This portion was passed to a catalytic combustion furnace, which was operated at a temperature of 375°C and in which any hydrogen sulphide and carbonyl sulphide were combusted to sulphur dioxide. The substantially hydrogen sulphide-loaded absorption solution from the atmospheric absorption column was passed to the upper section of the first absorption column as mentioned above.

The composition of the various gas streams is shown in the Table below. Although the quantity of carbonyl sulphide in the gas leaving the second absorption column was 900 ppmv, the total conversion of carbonyl sulphide in the process was 83.0%. The total sulphur yield from the sulphur recovery unit was 98.7% of the total quantity of sulphur present in the gas which had originally been supplied to the sulfinol unit.

For the total regeneration of the absorbent in the regeneration column 0.9 t. of stream/h is required. If no intermediate cooling of the solvent in the high-pressure absorption column takes place, 1.25 t. of steam/h is required.

TABLE

| Stream No. | 1* | 4 | 9** | 14 | 16 | 18 | 22 |
|---|---|---|---|---|---|---|---|
| Composition | Relative feed stream = 200 kmol.; (composition in % by vol.) | | | | | | |
| $H_2S$ | 1.32 (0.07) | $6.10^{-4}$ (3ppmv) | 5.36 (40.6) | 0.052 (0.8) | 3.96 (23.0) | 4.04 (23.5) | $5.10^{-3}$ (500ppmv) |
| $SO_2$ | – – | – – | – – | 0.026 (0.4) | 0.026 (0.2) | – – | – – |
| $CO_2$ | 4.88 (2.4) | 0.02 (100ppmv) | 7.04 (53.3) | 1.90 (30.0) | 7.12 (41.4) | 7.22 (42.0) | 5.04 (54.1) |
| COS | 0.07 (350ppmv) | $4.10^{-3}$ (20ppmv) | 0.07 (0.5) | 0.01 (0.02) | 0.06 (0.3) | 0.008 (500ppmv) | 0.008 (900ppmv) |
| $H_2O$ | 1.18 (0.6) | 1.08 (0.6) | 0.67 (5.1) | 1.65 (26.0) | 2.38 (13.8) | 2.33 (13.6) | 0.69 (7.4) |
| $N_2$ | 116.29 (58.2) | 116.26 (60.0) | 0.04 (0.3) | 2.70 (42.6) | 3.52 (20.5) | 3.52 (20.5) | 3.52 (37.8) |
| Other components | 76.28 (38.1) | 76.24 (39.4) | 0.02 (0.2) | 0.00 (0.0) | 0.14 (0.8) | 0.06 (0.3) | 0.06 (0.6) |
| Total | 200.00 (100.0) | 193.60 (100.0) | 13.20 (100.0) | 6.34 (100.0) | 17.21 (100.0) | 17.18 (100.0) | 9.32 (100.0) |

*$H_2S/CO_2$-ratio = 0.28
**$H_2S/CO_2$ ,, = 0.77

**Claims**

1. A process for the treatment of hydrogen sulphide-containing gases and the conversion of sulphur-containing compounds of said gases into elemental sulphur in a sulphur recovery unit with recovery of the resultant sulphur in which process

(a) gases having a relatively high carbon dioxide content in relation to the hydrogen sulphide present are introduced into a first absorption zone where they are countercurrently contacted with a regenerable absorption liquid supplied to the said zone, in order to remove hydrogen sulphide under operating conditions which are non-selective or substantially non-selective in respect of the co-absorption of carbon dioxide;

(b) the gases, freed from hydrogen sulphide are passed out of the absorption zone and the regenerable absorption liquid, loaded with hydrogen sulphide, and carbon dioxide, is supplied, directly or indirectly, from the absorption zone to a regeneration zone for regeneration by means of heating and/or stripping, yielding a gas mixture containing hydrogen sulphide and carbon dioxide, and a regenerated absorption liquid;

(c) the gas mixture obtained in step (b) and containing hydrogen sulphide, and carbon dioxide is at least partly supplied to a sulphur recovery unit containing at least one catalytic zone, with recovery of the resultant sulphur;

(d) the off-gas from the catalytic zone of the sulphur recovery unit is supplied to a catalytic reduction zone, in which sulphur compounds other than hydrogen sulphide are converted into hydrogen sulphide at a temperature above 170°C in the presence of hydrogen and/or carbon monoxide over a catalyst;

(e) the gas mixture leaving the catalytic reduction zone and containing substantially hydrogen sulphide as sole sulphur compound, is supplied to a second absorption zone, after cooling, in which second zone, in order to remove hydrogen sulphide, the gas mixture is contacted at a temperature below the dew point of water with a regenerable absorption liquid; and

(f) the gas mixture, freed from hydrogen sulphide, is discharged from the second absorption zone and the absorption liquid loaded substantially with hydrogen sulphide is regenerated characterized in that, in treating gases which also contain organic sulphur compounds in addition to hydrogen sulphide and which organic sulphur compounds are removed as well in step (a) by co-absorption, thereby yielding in step (b) a gas mixture containing organic sulphur compounds in addition to hydrogen sulphide and carbon dioxide, a portion of the gas mixture bypasses the sulphur recovery unit in step (c) and is directly introduced into the catalytic reduction zone in step (d), together with the off-gas from the catalytic zone of the sulphur recovery unit, the regenerable absorption liquid of the second absorption zone in step (e) being the same as the one of the first absorption zone and being applied under operating conditions which are selective in respect of the co-absorption of carbon dioxide, the hydrogen sulphide-loaded absorption liquid of the said second absorption zone subsequently being regenerated in step (f) by directly or indirectly supplying the same to the regneration zone in step (b), whereafter part of the regenerated absorption liquid is supplied to the first absorption zone and part thereof to the second regeneration zone.

2. A process as claimed in claim 1, characterized in that, the first absorption zone is divided into at least two sections arranged one above the other, and wherein the gases having a relatively high carbon dioxide content in relation to hydrogen sulphide are introduced into the lower one of the two sections and are passed out of the absorption zone, after having been freed from hydrogen sulphide and organic sulphur compounds, through the upper one of said two sections, whereas the absorption liquid is supplied to the upper one of the two sections, said absorption liquid being intermediately cooled outside the absorption zone before it is supplied from the upper section to the lower section of the zone.

3. A process as claimed in claim 2, characterized in that, in step (f) the hydrogen sulphide-loaded absorption liquid from the second absorption zone is at least partly supplied to the first absorption zone, and introduced into the upper section thereof.

4. A process as claimed in claim 3, characterized in that, in step (b) the regenerated absorption liquid is introduced at the top of the upper section of the first absorption zone and wherein in step (f) the absorption liquid loaded substantially with hydrogen sulphide is introduced into the bottom of said upper section.

5. A process as claimed in any one of claims 1—4, characterized in that, the gases which have a relatively high carbon dioxide content in relation to hydrogen sulphide, and which also contain organic sulphur compounds, have a calculated $H_2S/CO_2$ ratio of less than 1.

6. A process as claimed in any one of claims 1—5, characterized in that, of the gas mixture obtained in step (b) during regneration of the loaded absorption liquid a fraction is supplied to the sulphur recovery unit in step (c), which is numerically equal or substantially equal to the calculated $H_2S/CO_2$ ratio of the gas supplied to the first absorption zone in step (a).

7. A process as claimed in any one of claims 1—4, when used for gases which have a calculated $H_2S/CO_2$ ratio of more than 1, characterized in that, the supply of these gases during operation of the sulphur recovery unit is reduced by 25% or more.

8. A process as claimed in any one of claims 1—7, characterized in that, in the first absorption zone a gas velocity is used which is lower than 0.5 m/sec at pressures above atmospheric pressure, and in the second absorption zone a gas velocity is used which is higher than 0.5 m/sec at pressures which are below 5 kg/cm$^2$.

9. A process as claimed in any one of claims 2—8, characterized in that, in step (a) the regenerable absorption liquid is intermediately cooled to a temperature equal or substantially equal to the temperature of the absorption liquid which is supplied to the upper section.

10. A process as claimed in any one of claims 2—9, characterized in that, the first absorption zone has 10—50 contact layers, and the absorption liquid in step (a) is discharged for intermediate cooling at a point between the 5th and 15th contact layer thereof.

11. A process as claimed in claim 1 or any one of claims 5—8, characterized in that, the second absorption zone is divided into at least two sections arranged one above the other, the gas mixture leaving the catalytic reduction zone in step (e) being introduced into the lower one of the two sections and being discharged from said absorption zone through the upper section thereof, the absorption liquid being supplied to the upper zone of the two sections and being intermediately cooled outside said absorption zone before it is supplied from the upper section to the lower section of the zone which absorption liquid after leaving said lower section, is directly supplied to the regeneration zone in step (b).

12. A process as claimed in claim 11, characterized in that, the gas mixture discharged from the second absorption zone is introduced at the top of the first absorption zone for further removal of any sulphur compounds present.

**Revendications**

1. Procédé pour le traitement de gaz contenant de l'hydrogène sulfuré et la transformation de composés contenant du soufre présents dans ces gaz en soufre élémentaire dans une unité de récupération du soufre avec récupération du soufre résultant, selon lequel

(a) dez gaz ayant une relativement haute teneur en anhydride carbonique par rapport à l'hydrogène sulfuré présent sont introduits dans une première zone d'absorption dans laquelle ils sont mis en contact à contre-courant avec un liquide absorbant régénérable introduit dans cette zone, de manière à éliminer l'hydrogène sulfuré dans des conditions opératoires non sélectives ou sensiblement non sélectives en ce qui concerne la co-absorption d'anhydride carbonique;

(b) les gaz, dépouillés de l'hydrogène sulfuré, sont évacués de la zone d'absorption et le liquide absorbant régénérable chargé d'hydrogène sulfuré, et d'anhydride carbonique, est conduit, directement ou indirectement, de la zone d'absorption à une zone de régénération pour régénération par chauffage et/ou strippage, donnant un mélange gazeux contenant de l'hydrogène sulfuré et de l'anhydride carbonique, et un liquide absorbant régénéré;

(c) le mélange gazeux obtenu dans l'étape (b) et contenant de l'hydrogène sulfuré et de l'anhydride carbonique est conduit au moins partiellement à une unité de récupération du soufre contenant au moins une zone catalytique, avec récupération du soufre résultant;

(d) le gaz résiduel provenent de la zone catalytique de l'unité de récupération du soufre est conduit à une zone de réduction catalytique, dans laquelle les composés du soufre autres que l'hydrogène sulfuré sont transformés en hydrogène sulfuré à une température supérieure à 170°C en présence d'hydrogène et/ou d'oxyde de carbone sur un catalyseur;

(e) le mélange gazeux quittant la zone de réduction catalytique et contenant essentiellement de l'hydrogène sulfuré comme seul composé du soufre est conduit à une deuxième zone d'absorption, après refroidissement, deuxième zone dans laquelle, pour élimination de l'hydrogène sulfuré, le mélange gazeux est mis en contact à une température située audessous du point de rosée de l'eau avec un liquide absorbant régénérable; et

(f) le mélange gazeux, dépouillé d'hydrogène sulfuré, est déchargé de la deuxième zone d'absorption et le liquide absorbant chargé essentiellement d'hydrogène sulfuré est régénéré, caractérisé en ce que, dans le traitement de gaz qui contiennent aussi des composés organiques de soufre en plus de l'hydrogène sulfuré, ces composés organiques de soufre étant éliminés aussi dans l'étape (a) par co-absorption, donnant ainsi dans l'étape (b) un mélange gazeux contenant des composés organiques du soufre en plus d'hydrogène sulfuré et d'anhydride carbonique, une portion du mélange gazeux contourne l'unité de récupération du soufre dans l'étape (c) et est introduite directement dans la zone de réduction catalytique dans l'étape (d), en même temps que le gaz résiduel provenant de la zone catalytique de l'unité de récupération du soufre, le liquide absorbant régénérable de la deuxième zone d'absorption dans l'étape (e) étant le même que celui de la première zone d'absorption et étant utilisé dans des conditions opératoires sélectives en ce qui concerne la co-absorption d'anhydride carbonique, le liquide absorbant chargé d'hydrogène sulfuré de la deuxième zone d'absorption étant ensuite régénéré dans l'étape (f) et étant conduit directement ou indirectement à la zone de régénération de l'étape (b), après quoi une partie du liquide absorbant régénéré est conduite à la première zone d'absorption et une partie est conduite à la deuxième zone de régénération.

2. Procédé selon la revendication 1, caractérisé en ce que la première zone d'absorption est divisée en au moins deux sections disposées

l'une au-dessus de l'autre, et les gaz ayant une relativement haute teneur en anhydride carbonique par rapport à l'hydrogène sulfuré sont introduits dans la section inférieure et sont évacués de la zone d'absorption, après avoir été dépouillés de l'hydrogène sulfuré et des composés organiques du soufre, à travers la section supérieure, tandis que le liquide absorbant est introduit dans la section supérieure, ce liquide absorbant étant refroidi à un stade intermédiaire à l'extérieur de la zone d'absorption avant d'être introduit de la section supérieure à la section inférieure de la zone.

3. Procédé selon la revendication 2, caractérisé en ce que, dans l'étape (f), le liquide absorbant chargé d'hydrogène sulfuré provenant de la deuxième zone d'absorption est conduit au moins partiellement à la première zone d'absorption et introduit dans sa section supérieure.

4. Procédé selon la revendication 3, caractérisé en ce que, dans l'étape (b), le liquide absorbant régénéré est introduit dans le haut de la section supérieure de la première zone d'absorption et dans l'étape (f) le liquide absorbant chargé essentiellement d'hydrogène sulfuré est introduit dans le fond de la section supérieure.

5. Procédé selon l'une quelconque des revendications 1 à 4, caractérisé en ce que les gaz qui ont une relativement haute teneur en anhydride carbonique par rapport à l'hydrogène sulfuré et qui contiennent aussi des composés organiques du soufre ont un rapport calculé $H_2S/CO_2$ de moins de 1.

6. Procédé selon l'une quelconque des revendications 1 à 5, caractérisé en ce qu'une fraction du mélange de gaz obtenu dans l'étape (b) durant la régénération du liquide absorbant chargé est introduite dans l'unité de récupération du soufre dans l'étape (c), fraction qui est numériquement égale ou sensiblement égale au rapport calculé $H_2S/CO_2$ du gaz introduit dans la première zone d'absorption dans l'étape (a).

7. Procédé selon l'une quelconque des revendications 1 à 4, quand il est utilisé pour dez gaz qui ont un rapport $H_2S/CO_2$ calculé de plus de 1, caractérisé en ce que l'introduction de ces gaz durant le fonctionnement de l'unité de récupération du soufre est réduite de 25% ou plus.

8. Procédé selon l'une quelconque des revendications 1 à 7, caractérisé en ce que dans la première zone d'absorption on utilise une vitesse des gaz qui est inférieure à 0,5 m/s à des pressions supérieures à la pression atmosphérique et dans la deuxième zone d'absorption on utilise une vitesse des gaz qui est supérieure à 0,5 m/s à des pressions inférieures à 5 $kg/cm^2$.

9. Procédé selon l'une quelconque des revendications 2 à 8, caractérisé en ce que dans l'étape (a) le liquide absorbant régénérable est refroidi à un stade intermédiaire à une température égale ou sensiblement égale à la température du liquide absorbant qui est conduit à la section supérieure.

10. Procédé selon l'une quelconque des revendications 2 à 9, caractérisé en ce que la première zone d'absorption a de 10 à 50 couches de contact et le liquide absorbant dans l'étape (a) est déchargé pour refroidissement intermédiaire à un point situé entre sa 5ème et sa 15ème couche de contact.

11. Procédé selon la revendication 1 ou selon l'une quelconque des revendications 5 à 8, caractérisé en ce que la deuxième zone d'absorption est divisée en au moins deux sections disposées l'une au-dessus de l'autre, le mélange de gaz quittant la zone de réduction catalytique dans l'étape (e) étant introduit dans la section inférieure et étant déchargé de la zone d'absorption par sa section supérieure, le liquide absorbant étant introduit dans la section supérieure et étant refroidi à un stade intermédiaire à l'extérieur de la zone d'absorption avant d'être introduit de la section supérieure dans la section inférieure de la zone, le liquide absorbant, après avoir quitté la section inférieure, étant conduit directement à la zone de régénération dans l'étape (b).

12. Procédé selon la revendication 11, caractérisé en ce que le mélange de gaz déchargé de la deuxième zone d'absorption est introduit dans le haut de la première zone d'absorption pour élimination supplémentaire de tous composés du soufre présents.

**Patentansprüche**

1. Verfahren zur Behandlung von Schwefelwasserstoff enthaltenden Gasen und zur Umwandlung von Schwefel enthaltenden Verbindungen dieser Gase in elementaren Schwefel in einer Schwefelwiedergewinnungseinheit mit Wiedergewinnung des entstandenen Schwefels, wobei

(a) Gase mit einem relative hohen Kohlendioxidgehalt in bezug auf den vorhandenen Schwefelwasserstoff in eine erste Absorptionszone eingeführt werden, wo sie im Gegenstrom mit einer regenerierbaren, in die Zone eingespeisten Absorptionsflüssigkeit in Berührung gebracht werden, um den Schwefelwasserstoff unter Betriebsbedingungen zu entfernen, die nicht selektiv oder praktisch nicht selektiv in bezug auf die Coabsorption des Kohlendioxids sind;

(b) die vom Schwefelwasserstoff befreiten Gase aus der Absorptionszone abgezogen werden und die mit Schwefelwasserstoff beladene regenerierbare Flüssigkeit und das Kohlendioxid direkt oder indirekt aus der Absorptionszone in eine Regenerationszone zur Regeneration durch Erhitzen und/oder Strippen eingespeist werden, wobei ein Gasgemisch, das Schwefelwasserstoff und Kohlendioxid enthält, und eine regenerierte Absorptionsflüssigkeit erhalten werden;

(c) das in Stufe (b) erhaltene, Schwefelwasserstoff und Kohlendioxid enthaltende Gasgemisch zumindest teilweise in eine Schwefelwiedergewinnungseinheit eingespeist wird, die mindestens eine katalytische Zone enthält, und der entstandene Schwefel wiedergewonnen wird;

(d) das Abgas aus der katalytischen Zone der Schwefelwiedergewinnungseinheit in eine katalytische Reduktionszone eingespeist wird, in der Schwefelverbindungen, ausser Schwefelwasserstoff, bei einer Temperatur über 170°C in Gegenwart von Wasserstoff und/oder Kohlenmonoxid über einem Katalysator in Schwefelwasserstoff umgewandelt werden;

(e) das Gasgemisch, das die katalytische Reduktionszone verlässt und im wesentlichen Schwefelwasserstoff als einzige Schwefelverbindung enthält, nach dem Abkühlen in eine zweite Absorptionszone eingespeist wird, in der das Gasgemisch zur Entfernung des Schwefelwasserstoffs bei einer Temperatur unter dem Taupunkt von Wasser mit einer regenerierbaren Absorptionsflüssigkeit in Berührung gebracht wird; und

(f) das vom Schwefelwasserstoff befreite Gasgemisch aus de zweiten Absorptionszone abgeleitet wird und die im wesentlichen mit Schwefelwasserstoff beladene Absorptionsflüssigkeit regeneriert wird, dadurch gekennzeichnet, dass bei der Behandlung von Gasen, die zusätzlich zum Schwefelwasserstoff auch organische Schwefelverbindungen enthalten, die gleichfalls in Stufe (a) durch Co-absorption entfernt werden, wobei in Stufe (b) ein Gasgemisch erhalten wird, das zusätzlich zum Schwefelwasserstoff und Kohlendioxid organische Schwefelverbindungen enthält, ein Teil des Gasgemisches die Schwefelwiedergewinnungseinheit in Stufe (c) umgeht und direkt in die katalytische Reduktionszone der Stufe (d) zusammen mit dem Abgas aus der katalytischen Zone der Schwefelwiedergewinnungseinheit eingeführt wird, die regenerierbare Absorptionsflüssigkeit der zweiten Absorptionszone in Stufe (e) die gleiche ist wie die der ersten Absorptionszone und unter Betriebsbedingungen angewendet wird, die selektiv in bezug auf die Coabsorption des Kohlendioxids sind, die mit Schwefelwasserstoff beladene Absorptionsflüssigkeit der zweiten Absorptionszone anschliessend in Stufe (f) regeneriert wird durch direktes oder indirektes Einspeisen der Flüssigkeit in die Regenerationszone der Stufe (b), wonach ein Teil der regenerierten Absorptionsflüssigkeit in die erste Absorptionszone und ein Teil in die zweite Regenerationszone eingespeist wird.

2. Verfahren gemäss Anspruch 1, dadurch gekennzeichnet, dass die erste Absorptionszone in mindestens zwei übereinander angeordnete Abschnitte unterteilt ist, wobei die Gase mit einem relativ hohen Kohlendioxidgehalt in bezug auf den Schwefelwasserstoff in den unteren der beiden Abschnitte eingeführt werden und aus der Absorptionszone durch den oberen der beiden Abschnitte abgezogen werden, nachdem sie von Schwefelwasserstoff und den organischen Schwefelverfindungen befreit worden sind, die Absorptionsflüssigkeit dagegen in den oberen der beiden Abschnitte eingespeist wird und zwischendurch ausserhalb der Absorptionszone gekühlt wird, bevor sie vom oberen Abschnitt in den unteren Abschnitt der Zone eingespeist wird.

3. Verfahren gemäss Anspruch 2, dadurch gekenzeichnet, dass in Stufe (f) die mit Schwefelwasserstoff beladene Absorptionsflüssigkeit aus der zweiten Absorptionszone zumindest teilweise in die erste Absorptionszone eingespeist und in den oberen Abschnitt derselben eingeführt wird.

4. Verfahren gemäss Anspruch 3, dadurch gekennzeichnet, dass in Stufe (b) die regenerierte Absorptionsflüssigkeit am Kopf des oberen Abschnitts der ersten Absorptionszone eingeführt wird und in Stufe (f) die im wesentlichen mit Schwefelwasserstoff beladene Absorptionsflüssigkeit am Boden des genannten oberen Abschnitts eingeführt wird.

5. Verfahren gemäss einem der Ansprüche 1 bis 4, dadurch gekennzeichnet, dass die Gase, die einen relativ hohen Kohlendioxidgehalt in bezug auf den Schwefelwasserstoff haben und auch organische Schwefelverbindungen enthalten, ein berechnetes Verhältnis $H_2S/CO_2$ unter 1 haben.

6. Verfahren gemäss einem der Ansprüche 1 bis 5, dadurch gekennzeichnet, dass aus dem in Stufe (b) während der Regeneration der beladenen Absorptionsflüssigkeit erhaltenen Gasgemisch eine Fraktion in die Schwefelwiedergewinnungseinheit der Stufe (c) eingespeist wird, die numerisch gleich oder praktisch gleich ist dem berechneten $H_2S/CO_2$-Verhältnis des in die erste Absorptionszone der Stufe (a) eingespeisten Gases.

7. Verfahren gemäss einem der Ansprüche 1 bis 4 bei Verwendung für Gase mit einem berechneten $H_2S/CO_2$-Verhältnis über 1, dadurch gekennzeichnet, dass die Einspeisung dieser Gase während des Betriebs der Schwefelwiedergewinnungseinheit um 25% oder mehr reduziert wird.

8. Verfahren gemäss einem der Ansprüche 1 bis 7, dadurch gekennzeichnet, dass in der ersten Absorptionszone eine Gasgeschwindigkeit verwendet wird, die kleiner als 0,5 m/s ist bei Drücken über Atmosphärendruck, und in der zweiten Absorptionszone eine Gasgeschwindigkeit verwendet wird, die grösser als 0,5 m/s bei Drücken unter 5 $kg/cm^2$ ist.

9. Verfahren gemäss einem der Ansprüche 2 bis 8, dadurch gekennzeichnet, dass in Stufe (a) die regenerierbare Absorptionsflüssigkeit zwischendurch auf eine Temperatur abgekühlt wird, die gleich oder praktisch gleich der Temperatur der Absorptionsflüssigkeit ist, die in den oberen Abschnitt eingespeist wird.

10. Verfahren gemäss einem der Ansprüche

2 bis 9, dadurch gekennzeichnet, dass die erste Absorptionszone 10 bis 50 Kontaktböden hat und die Absorptionsflüssigkeit in Stufe (a) für die dazwischenliegende Abkühlung an einem Punkt abgezogen wird, der zwischen dem 5. und 15. Kontaktboden liegt.

11. Verfahren gemäss Anspruch 1 oder einem der Ansprüche 5 bis 8, dadurch gekennzeichnet, dass die zweite Absorptionszone in mindestens zwei über einander angeordenete Abschnitte unterteilt ist, das die katalytische Reduktionszone der Stufe (e) verlassende Gasgemisch in den unteren der beiden Abschnitte eingeführet und aus der Absorptionszone durch den oberen Abschnitt abgezogen wird, die Absorptionsflüssigkeit in die obere Zone der beiden Abschnitte eingespeist wird und zwischendurch ausserhalb der Absorptionszone abgekühlt wird, bevor sie vom oberen Abschnitt in den unteren Abschnitt eingespeist wird, und nach Verlassen des unteren Abschnitts direkt in die Regenerierzone der Stufe (b) eingeführt wird.

12. Verfahren gemäss Anspruch 11, dadurch gekennzeichnet, dass das Gasgemisch, das aus der zweiten Absorptionszone abgezogen wird, am Kopf der ersten Absorptionszone zur weiteren Entfernung von eventuell vorhandenen Schwefelverbindungen eingeführt wird.

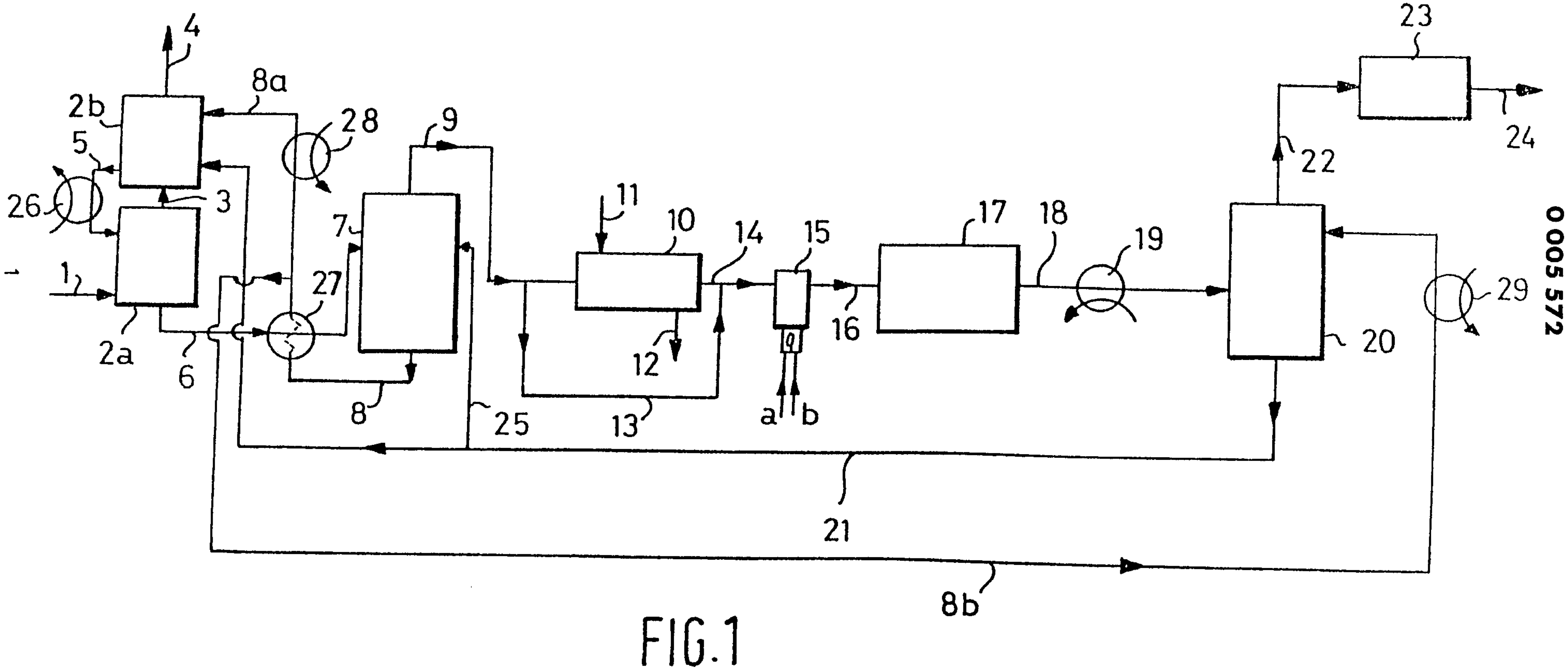
1
2a
2b
3
4
5
6
7
8
8a
8b
9
10
11
12
13
14
15
16
17
18
19
20
21
22
23
24
25
26
27
28
29
a
b

FIG.1

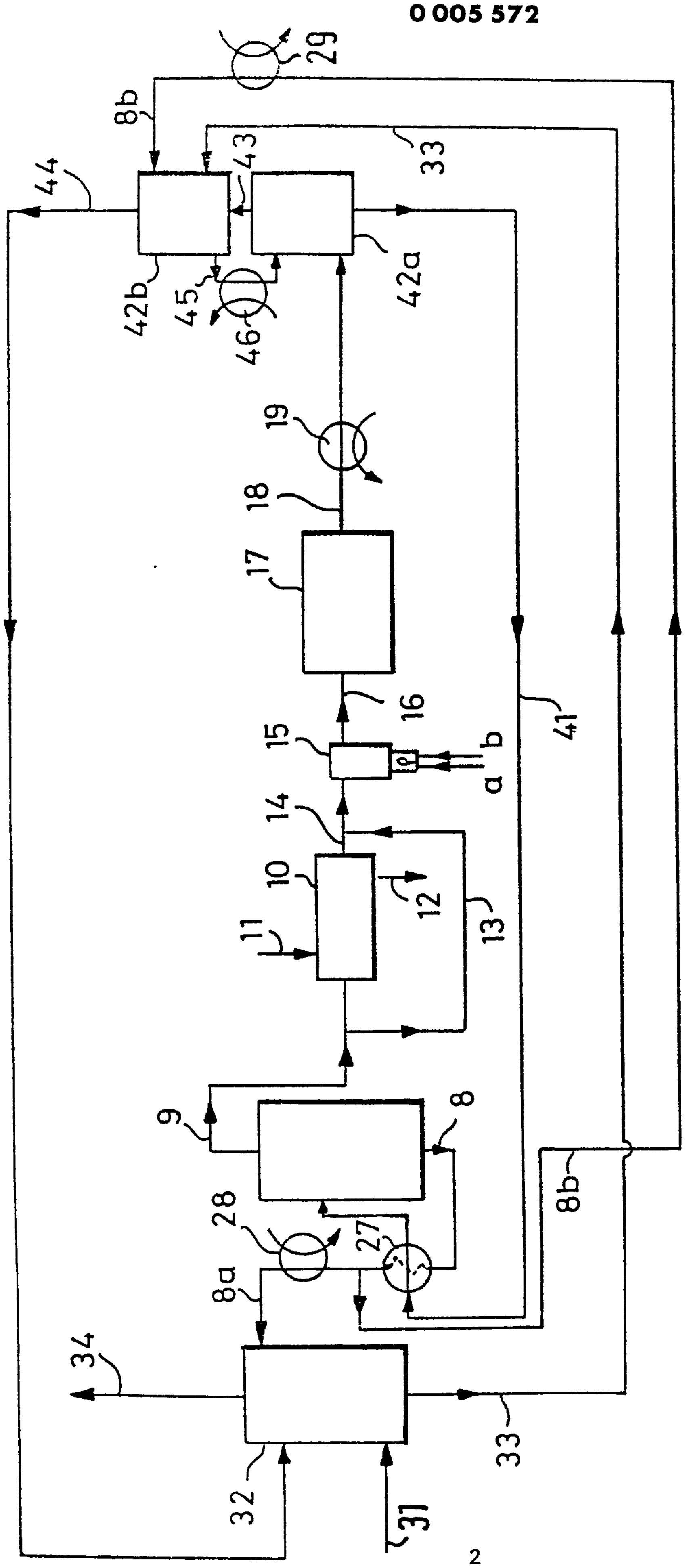
29
8b
33
43
44
42b
42a
45
46
19
18
17
16
15
a
b
41
14
10
11
12
13
9
8
28
27
8a
8b
34
33
32
31

FIG. 2